# EUROPÄISCHE PATENTSCHRIFT

(11) **EP 2 145 708 B1**
(45) Veröffentlichungstag und Bekanntmachung des Hinweises auf die Patenterteilung: **04.04.2012**
(21) Anmeldenummer: 09008346.0
(22) Anmeldetag: 26.06.2009
(51) Int. Cl.: B21D 53/26, B60B 3/02, B60B 3/10

(54) **Verfahren zur Herstellung einer Felge**
Method for producing a rim
Procédé de fabrication d'une jante

(30) Priorität: 16.07.2008 DE 102008034189
(43) Veröffentlichungstag der Anmeldung: 20.01.2010
(73) Patentinhaber: ELATIO Consulting GmbH, 71272 Renningen (DE); Aschwanden, Felix, 8955 Oetwil a.d. Limmat (CH)
(72) Erfinder: Aschwanden, Felix, 8955 Oetwil an der Limmat (CH); Längerer, Marcus, 71272 Renningen (DE)
(74) Vertreter: Klement, Lukas

(56) Entgegenhaltungen:
- EP-A1- 0 027 272
- EP-A1- 1 439 018
- GB-A- 1 418 627
- US-A- 1 779 476

## Beschreibung

Die Erfindung betrifft ein Fahrzeugrad oder einen Radstern hierfür mit einem Grundkörper aus gegossenem oder geschmiedeten Metall, der auf seiner fahrzeugabgewandten Seite mit einer Lackschicht versehen ist und der an seiner fahrzeugabgewandten Seite zum einen Flächenabschnitte aufweist, die nicht spanend bearbeitet sind, und zum anderen mindestens einen Flächenabschnitt aufweist, der durch spanende Bearbeitung als Glanzfläche ausgebildet ist. Die Erfindung betrifft weiterhin ein Verfahren zur Herstellung eines solchen Fahrzeugrades bzw. Radsterns.

Bei Fahrzeugrädern für Personenkraftwagen sind insbesondere Stahlräder und Leichtmetallräder üblich. Insbesondere Leichtmetallräder weisen häufig einen geschmiedeten oder gegossenen Grundkörper auf, der durch den Schmiedevorgang oder den Gießvorgang bereits in die gewünschte Formgebung des Rades gebracht wird. Auf der fahrzeugabgewandten Seite des Rades, also auf im montierten Zustand sichtbaren Seite, sind Insbesondere zur Verschönerung des ästhetischen Eindrucks bei gattungsgemäßen Fahrzeugrädern Glanzflächen vorgesehen, welche während des Herstellungsprozesses durch so genanntes Glanzdrehen erzeugt werden. Bei diesem Glanzdrehen rotiert der Grundkörper um seine Mittelachse, während an der fahrzeugabgewandten Seite durch einen Drehmeißel die Glanzflächen spanabhebend erzeugt werden. Solch ein gattungsgemäßes Rad ist aus der GB 1 418 627 A bekannt.

Nachteilig an diesem Verfahren ist, dass die Flexibilität bei der Formgebung der Glanzflächen sehr begrenzt ist. Die Glanzflächen sind aufgrund des Drehvorgangs zwangsläufig auf einer gemeinsamen bezogen auf die Mittelachse rotationssymmetrischen Fläche angeordnet, welche durch den Bewegungspfad des Drehmeißels vorgegeben ist. Prinzipbedingt gestattet der Drehvorgang es nicht, in Winkelbereichen zwischen den Glanzflächen auf der fahrzeugabgewandten Seite Erhebungen stehen zu lassen. Erhebungen, die von der Mittelachse ebenso weit entfernt sind, wie die durch das Glanzdrehen zu erzeugenden Glanzflächen, werden stattdessen während des Drehvorgangs zwangsläufig mit abgenommen.

Alternative Techniken zur Herstellung ansprechender glänzender Fahrzeugräder oder Radsterne sehen vor, dass das Fahrzeugrad in seiner Gesamtheit verchromt wird. Alternativ ist auch ein Glanzpolieren der Fahrzeugräder möglich, wobei dies arbeitsintensiv und insbesondere bei gegossenen Grundkörpern aufgrund von Einschlüssen im Gefüge ein nicht vollständig befriedigendes Ergebnis liefert.

Aus der JP 2001150089 A ist ein Herstellungsverfahren für geschmiedete Felgen bekannt, im Verlauf dessen auch Fräsbearbeitungsschritte vorgesehen sind.

### Aufgabe und Lösung

Aufgabe der Erfindung ist es, ein in funktionaler und ästhetischer Hinsicht gegenüber dem Stand der Technik vorteilhaftes Fahrzeugrad bzw. einen Radstern hierfür zur Verfügung zu stellen. Aufgabe der Erfindung ist weiterhin, ein hierfür geeignetes Fertigungsverfahren zur Verfügung zu stellen.

Erfindungsgemäß wird dies dadurch erreicht, dass bei einem gattungsgemäßen Rad oder Radstern die mindestens eine Glanzfläche zumindest abschnittsweise derart ausgerichtet, dass eine Flächennormale auf der Glanzfläche eine Mittelachse des Rades oder des Felgensterns nicht kreuzt und nicht zur Mittelachse parallel verläuft und die Lackschicht im Bereich der Glanzfläche durch die spanende Bearbeitung entfernt ist.

Im Zusammenhang mit der vorliegenden Erfindung sind Bezugnahmen auf die fahrzeugzugewandte und die fahrzeugabgewandte Seite des Rades sowie Bezugnahmen auf die Fahrzeugquerrichtung auf den am Fahrzeug angebauten Zustand des Fahrzeugrades oder des Radsterns bezogen. Bezugnahmen auf eine Innen- oder eine Außenseite des Rades beziehen sich auf die radiale Erstreckung. Als Mittelachse wird die Drehachse des Rades im am Fahrzeug montierten Zustand bezeichnet.

Bei einem Radstern umfasst der Grundkörper zumindest die Nabe sowie die Radscheibe oder die Speichen. Bei einem Fahrzeugrad ist außerdem noch die eigentliche Felge umfasst. Erfindungsgemäße Räder oder Radsterne sind vorzugsweise aus einem Leichtmetall gefertigt, insbesondere aus Aluminium.

Die fahrzeugabgewandte Seite, an der die mindestens eine Glanzfläche vorgesehen ist, bildet den im am Fahrzeug montierten Zustand von außen sichtbaren Teil des Fahrzeugrades oder des Radsterns. Die Glanzfläche ist vorzugsweise derart an der fahrzeugabgewandten Seite angeordnet und/oder derart ausgerichtet, dass eine Flächennormale zumindest auf einem Teilabschnitt der Glanzfläche mit der Mittelachse einen Winkel von weniger als 40° einschließt. Besonders bevorzug ist es, wenn die Glanzfläche vollständig derart ausgerichtet ist, dass die Flächennormale mit der Mittelachse einen Winkel von weniger als 40° einschließt.

Die Erfindung gestattet es, Glanzflächen an der fahrzeugabgewandten Seite vorzusehen, die abweichend von den üblichen durch spanende Bearbeitung hergestellten Glanzflächen nicht oder zumindest nicht vollständig auf einer rotationssymmetrischen Fläche liegt. Stattdessen sind zumindest Abschnitte der Glanzfläche derart ausgerichtet, dass die Flächennormale auf diesen Abschnitten die Mittelachse weder kreuzt noch zu ihr parallel ausgerichtet ist. Im Zusammenhang mit dieser Erfindung werden die Flächennormale und die Mittelachse als nicht kreuzend angesehen, wenn sie sich nicht auf weniger als 10 mm aneinander annähern. Die Glanzfläche ist demnach erfindungsgemäß zumindest partiell so geneigt, dass der Normalenvektor eine Richtungskomponente in Tangentialrichtung aufweist.

Die erfindungsgemäße Gestaltung gestattet es, insbesondere aus ästhetischen Gründen vorgesehene spanend bearbeitete Glanzflächen mit einer funktional oder ästhetisch vorteilhaften Formgebung zu versehen. Der Mittenrauhwert der Glanzfläche liegt vorzugsweise unter 6,3 µm, vorzugsweise unter 3,2 µm, insbesondere Vorzugsweise unter 1,6 µm. Die Gestaltung mit den erfindungsgemäß vorgesehen Glanzflächen ist insbesondere bei Fahrzeugrädern oder Radsternen, deren Grundkörper als Gussteile hergestellt ist, zweckmäßig. Aufgrund der Materialstruktur dieser Gussteile eignen sich hier alternative Bearbeitungsmethoden, beispielsweise das Glanzpolieren, nicht zur Erzeugung des gewünschten Glanzes, da nach dem Polieren Einschlüsse im Material sichtbar würden und den ästhetischen Eindruck verschlechtern würden. Die spanende Bearbeitung hingegen führt zu guten Ergebnissen.

Bei erfindungsgemäßen Fahrzeugrädern oder Radsternen ist nicht die vollständige fahrzeugabgewandte Seite spanbearbeitet. Es verbleiben Abschnitte, bei denen eine weitergehende Bearbeitung der durch den Gießvorgang erzeugten Oberfläche nur noch in Hinblick auf Lackbeschichtungen o.ä. erfolgt. So ist es insbesondere vorteilhaft, wenn die nicht spanend bearbeiteten Flächenabschnitte an der fahrzeugabgewandten Seite mit einem Farblack lackiert sind, so dass sie einen deutlichen Kontrast zu den Glanzflächen bilden. Der Farblack wird dabei vorzugsweise zunächst auf der gesamten fahrzeugabgewandten Seite aufgebracht, um ihn anschließend im Bereich der Glanzflächen durch die spanende Bearbeitung gemeinsam mit der darunterliegenden Oberfläche des Gussteils wieder zu entfernen.

Das Herstellungsverfahren zur Herstellung eines erfindungsgemäßen Fahrzeugrades oder eines erfindungsgemäßen Radsterns ist im Weiteren noch erläutert.

Vorzugsweise sind statt einer einzigen Glanzfläche mehrere Glanzflächen vorgesehen, die insbesondere umlaufend auf der fahrzeugabgewandten Seite des Fahrzeugrades verteilt sind. Die im Folgenden erläuterten Weiterbildungen der Erfindung können bei einzelnen oder bei allen Glanzflächen des Fahrzeugrades oder des Radsterns vorgesehen sein.

Bei einer Weiterbildung der Erfindung ist die Glanzfläche gegenüber äquidistant zur Mittelachse angeordneten fahrzeugabgewandten Flächenabschnitten des Grundkörpers zurückgesetzt. Bei einer solchen Ausgestaltung ist die Glanzfläche gegenüber anderen Flächenabschnitten, die ebenfalls an der fahrzeugabgewandten Seite vorgesehen sind und im gleichen Abstand zur Mittelachse angeordnet sind, in Richtung der Fahrzeugquerachse zurückgesetzt. Diese Gestaltung gestattet es insbesondere, im gleichen Abstand zur Mittelachse sowohl ästhetisch ansprechende Glanzflächen als auch davon in Umfangsrichtung beabstandete Funktionsteile vorzusehen, beispielsweise Verstärkungsrippen oder -streben, die in Hinblick auf die Betriebssicherheit des Fahrzeugs von Vorteil sind. Ebenso von dieser Weiterbildung umfasst sind verschiedene Glanzflächen, die in gleichem Abstand zur Mittelachse angeordnet sind und die sich in verschiedenem Maße in Fahrzeugquerrichtung erheben. Dies erlaubt eine Reihe von ästhetisch vorteilhaften Effekten, beispielsweise durch in Umfangsrichtung verteilte Glanzflächen, die auf verschieden hohen Erhebungen vorgesehen sind oder durch eine durchgehende Glanzfläche, die sich in Umfangsrichtung in der Art einer Sinuskurve umlaufend wechselnd erhebt und absenkt.

Besonders von Vorteil ist es, wenn die Glanzfläche länglich geformt ist, im Bereich einer Speiche vorgesehen ist und sich etwa radial erstreckt. Derartige Glanzflächen werden als ästhetisch besonders vorteilhaft angesehen. Sie bilden eine Verzierung der Speichen oder eines Teils der Speichen und erstrecken sich etwa in Richtung der Speichen. Unter einer radialen Erstreckung wird der Zusammenhang mit dieser Weiterbildung eine Erstreckung verstanden, die um nicht mehr als 20° von der Radialrichtung divergiert.

Besonders von Vorteil ist es, wenn die Glanzfläche uneben ausgebildet ist. Eine unebene Gestaltung der Glanzfläche führt zu ästhetisch besonders vorteilhaften Effekten. Als unebene Glanzfläche wird eine Glanzfläche angesehen, die Flächenabschnitte mit nichtparallelen Flächennormalen aufweist, wobei die Flächenabschnitte fließend und ohne Sprung ineinander übergehen.

Als eine besonders vorteilhafte Ausgestaltung einer unebenen Glanzfläche wird eine Glanzfläche angesehen, die länglich ausgebildet ist und quer zu ihrer Haupterstreckungsrichtung zumindest abschnittsweise einen konkaven und/oder konvexen Querschnitt aufweist. Die Haupterstreckungsrichtung ist dabei durch eine Verbindungslinie zwischen den beiden distalen Enden der länglichen Glanzfläche definiert. Bei einer konkaven Gestaltung entsteht durch diese Ausgestaltung der Eindruck einer auf dem Grundkörper aufgebrachten metallischen Spur. Die konvexe Gestaltung ist vor allen Dingen aufgrund der sehr einfachen Herstellbarkeit von Vorteil. Sie kann durch einen nur einmal durchlaufenen Bewegungspfad eines Kugelfräskopfs in radialer Richtung entlang des Speiche erzielt werden.

Besonders vorteilhaft ist es weiterhin, wenn die Glanzfläche länglich ausgebildet ist und in Umfangsrichtung gegenüber einer Tangente zumindest abschnittsweise um einen Neigungswinkel geneigt ist. Eine solche Glanzfläche fällt demnach zumindest abschnittsweise in Umfangsrichtung ab oder steigt in Umfangsrichtung an. Auch der hierdurch erzielbare ästhetische Eindruck wird als vorteilhaft angesehen. Weiterhin kann in Abhängigkeit der Neigungsrichtung und der weiteren Parameter der Glanzfläche auch eine Verringerung des Luftwiderstandes des Rades erreicht werden, indem die die Glanzflächen aufweisenden Erhebungen an der fahrzeugabgewandten Seite des Fahrzeugrades in Drehrichtung bezogen auf die Vorwärtsfahrrichtung des Fahrzeugs abfallen.

Bei derartigen geneigten Gestaltungen der Glanzfläche ist es besonders vorteilhaft, wenn der Neigungswinkel sich entlang der Haupterstreckungsrichtung der Glanzfläche ändert. Eine solche Gestaltung mit variablem Neigungswinkel führt zu einem ästhetisch vorteilhaften Eindruck. Besonders von Vorteil ist es dabei, wenn die Glanzfläche entlang ihrer Haupterstreckungsrichtung von einem Neigungswinkel von 0° oder weniger ausgehend sich bis hin zu einem Neigungswinkel von 10° oder mehr verdreht. Besonders vorteilhaft ist weiterhin auch eine Gestaltung, bei der die Neigungsrichtung sich entlang der Haupterstreckungsrichtung der Glanzfläche ändert, so dass beispielsweise an einem inneren Ende der Glanzfläche die Glanzfläche entgegen der Drehrichtung des Rades abfällt und an einem äußeren Ende die Glanzfläche in Richtung der Drehrichtung abfällt.

Weiterhin wir es als vorteilhaft angesehen, wenn mehrere Glanzflächen vorgesehen sind, die in Form länglicher und zueinander paralleler Vertiefung ausgebildet sind. Die Glanzflächen sind dabei vorzugsweise jeweils recht schmal ausgebildet. Vorzugsweise weisen sie eine Breite von 20 mm oder weniger, insbesondere von 10 mm oder weniger auf. Vorzugsweise grenzen die Glanzflächen dabei nicht unmittelbar aneinander an, sondern sind durch nicht spanend bearbeitete Flächenabschnitte voneinander getrennt. Dies ist besonders von Vorteil, wenn die nicht spanend bearbeiteten Flächenabschnitte mit einem Farblack lackiert sind, so dass trotz der Verwendung nur einer Lackfarbe der Eindruck von Lackfarben in verschiedenen Helligkeitsstufen erzielt wird, da die Glanzflächen, insbesondere wenn das Fahrzeugrad sich im Betrieb dreht, den Farbeindruck des Lacks auf den Stegen zwischen den Glanzabschnitten verändern.

Bei einer anderen Weiterbildung der Erfindung sind mindestens zwei zueinander im Wesentlichen parallele Glanzflächen im Bereich einer Speiche vorgesehen, zwischen denen eine Vertiefung vorgesehen ist. Die Glanzflächen erstrecken sich dabei vorzugsweise in Richtung der Erstreckung der Speiche. Durch die beiden Glanzflächen wird eine besonders vorteilhafte ästhetische Wirkung erzielt. Die Vertiefung zwischen den Glanzflächen kann so ausgebildet sein, dass sie die Glanzflächen vollständig voneinander trennt. Es jedoch auch möglich, diese Vertiefung lediglich als Tasche zu gestalten, die kürzer als die parallelen Glanzflächen ist, so dass die Glanzflächen an ihren beiden Enden oder an einem Ende miteinander in Verbindung stehen. Die Vertiefung selbst kann ebenfalls als Glanzfläche ausgebildet sein, also ebenfalls durch spanende Bearbeitung erzeugt werden. Die Vertiefung ist besonders deshalb von Vorteil, da sie es gestattet, dass die angrenzenden Glanzflächen nacheinander von einem Fräswerkzeug bearbeitet werden, ohne dass das Fräswerkzeug dabei die Oberfläche der jeweils anderen Glanzfläche verletzt.

Besonders von Vorteil ist es, wenn die beiden parallelen Glanzflächen ebenensymmetrisch ausgebildet sind zu einer durch die Erstreckungsrichtung der Speiche und die Mittelachse des Grundkörpers aufgespannten Ebene.

Vorzugsweise sind an mehreren Speichen Glanzflächen vorgesehen, wobei mindestens zwei Speichen vorgesehen sind, im Bereich derer jeweils mindestens eine Glanzfläche vorgesehen ist, wobei die Glanzflächen um die Mittelachse achsensymmetrisch zueinander angeordnet und ausgerichtet sind. Im Falle von tangential geneigten Glanzflächen an mehreren Speichen würde eine solche Gestaltung beispielsweise zur Folge haben, dass die Glanzflächen in gleichem Maße und in gleicher Drehrichtung abfallen.

Die Erfindung betrifft weiterhin ein Verfahren zur Herstellung eines Fahrzeugrades oder eines Radsterns für ein Fahrzeugrad, insbesondere zur Herstellung eines Fahrzeugrades oder eines Radsterns oben beschriebener Art, wobei ein durch Gießen oder Schmieden hergestellter Grundkörper zur Herstellung einer Glanzfläche im Bereich seiner fahrzeugabgewandten Seite abschnittsweise spanend bearbeitet wird, wobei vor der spanenden Bearbeitung eine Lackschicht auf die fahrzeugabgewandte Seite des Fahrzeugrades oder des Radsterns aufgebracht wird und die spanende Bearbeitung durch eine Fräsbearbeitung erfolgt, wobei durch die spanende Bearbeitung die Lackschicht im Bereich der Glanzfläche entfernt wird.

Bei dieser Art der Herstellung wird also zunächst der Grundkörper geschmiedet oder vorzugsweise gegossen. Durch die nachfolgende Fräsbearbeitung ist eine sehr flexible Herstellung der Glanzflächen möglich. Diese Glanzflächen, die an der fahrzeugabgewandten Seite des Grundkörpers vorgesehen sind und die einen Kontrast zu an der fahrzeugabgewandten Seite verbleibenden nicht spanend bearbeiteten Flächen bilden, können durch die Fräsbearbeitung besonders flexibel gestaltet sein. Insbesondere ist es möglich, Glanzflächen herzustellen, die in Umfangsrichtung geneigt sind oder die bezogen auf eine Radialrichtung einen konkaven oder konvexen Querschnitt aufweisen. Weiterhin können auch vertiefte Glanzflächen vorgesehen werden, die gegenüber anderen Abschnitten des Grundkörpers, die in gleicher Entfernung zur Mittelachse vorgesehen sind, zurückgesetzt sind.

Als Fräsbearbeitung wird im Zusammenhang mit dieser Erfindung eine Bearbeitung mit einem bezogen auf mehrere Freiheitsgrade, insbesondere mindestens drei Freiheitsgrade, lageveränderbaren und rotierenden Werkzeug mit geometrisch bestimmter Schneide angesehen. Dieses Werkzeug ist bei insbesondere ruhendem Grundkörper relativ zu diesem Grundkörper verfahrbar und rotiert zum Zwecke der Bearbeitung. Verwendung können sowohl CNC-Fräsmaschinen als auch entsprechende Fräsroboter finden.

Je nach gewünschter Formgebung der Glanzflächen sind verschiedene Fräsoperationen zwecksmäßig. Bei länglichen Glanzflächen, die sich in etwa radial erstrecken, wird es als bevorzugte Fräsoperation angesehen, dass mit einem Umfangsfräser oder einem Kugelkopffräser eine beim vorausgehenden Gieß- oder Schmiedevorgang verbleibende Erhebung, insbesondere im Bereich einer Speiche, zum Teil abgetragen wird. Dabei wird der Fräser vorzugsweise einfach oder mehrfach entlang des Verlaufs der länglichen Erhebung bewegt. Eine in Umfangsrichtung geneigte Glanzfläche kann beispielsweise durch einen schräg zur Mittelachse ausgerichteten Umfangsfräser erzielt werden, der in radiale Richtung entlang der Erhebung geführt wird. Eine kontinuierliche Neigungsänderung der herzustellenden Glanzfläche von innen nach außen kann erreicht werden, wenn der Fräser während des Fräsvorgangs kontinuierlich bezüglich seiner Rotationsachse gekippt wird. Die ebenfalls als vorteilhaft angesehener konkave Ausgestaltung der Glanzfläche kann durch einen Kugelfräser erzielt werden, der spanabhebend entlang der Erhebung bewegt wird. Als besonders vorteilhaft wird es angesehen, wenn der Kugelfräser dabei bezüglich seiner Bewegungsrichtung leicht von der Erstreckungsrichtung der länglichen Erhebung abweicht oder unterschiedlich tief in die Erhebung eintaucht, so dass ein variierender Querschnitt der erzeugten Glanzfläche erzielt wird.

### Beschreibung von Ausführungsbeispielen

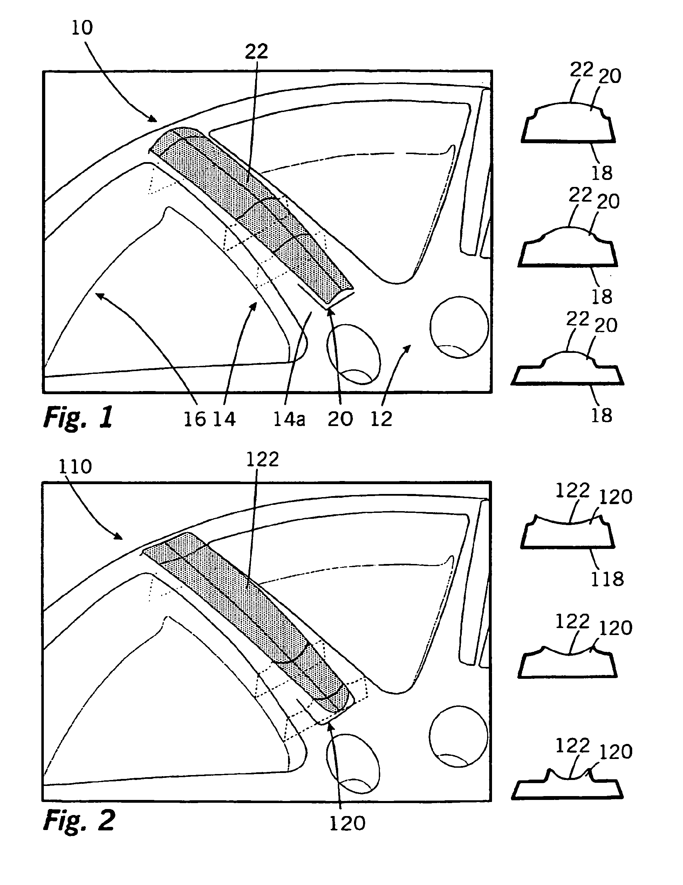

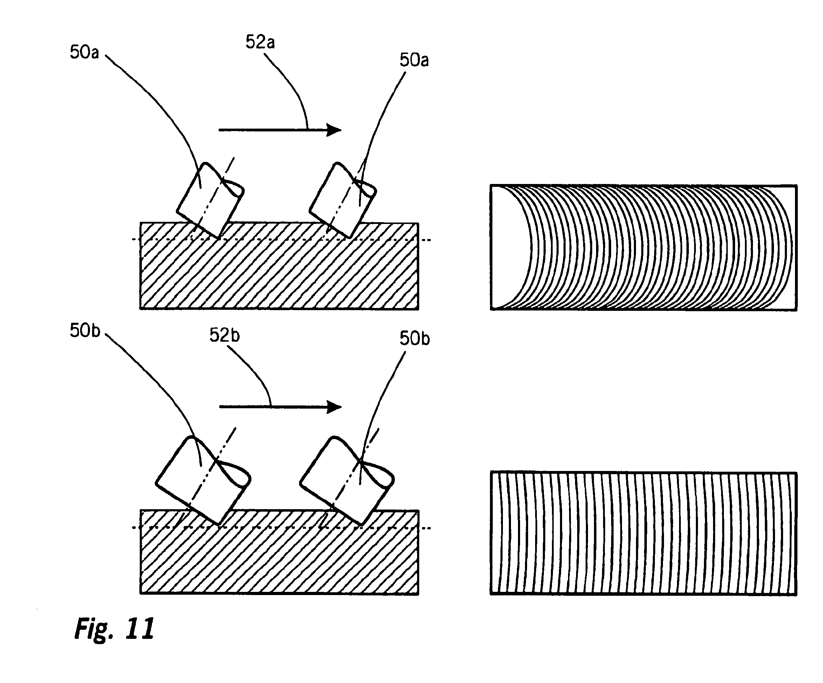

Weitere Aspekte und Vorteile der Erfindung ergeben sich außer aus den Ansprüchen auch aus der nachfolgenden Beschreibung bevorzugter Ausführungsformen der Erfindung. Dabei zeigen die Figuren 1 bis 10 verschiedene Ausführungsformen eines erfindungsgemäßen Fahrzeugrades, wobei zur Verdeutlichung zum Teil Schnittdarstellungen einer Speiche des Fahrzeugrades zusätzlich dargestellt sind. In Fig. 11 ist dargestellt, wie sich durch die Wahl verschiedener Fräswerkzeuge verschiedene Effekte erzielen lassen.

Bezugszeichen ähnlicher oder identischer Komponenten sind in den Ausführungsbeispielen hinsichtlich der letzten beiden Stellen identisch.

In Fig. 1 ist ein Teil einer ersten Ausführungsform eines erfindungsgemäßen Fahrzeugrades dargestellt. Dieses Fahrzeugrad 10 weist einen Zentralabschnitt 12 auf, an dem die nicht dargestellte Nabe vorgesehen ist. Vom Zentralabschnitt 12 erstrecken sich in radialer Richtung nach außen Speichen 14, deren äußeres Ende in einen Außenrand 16 übergeht. Das dargestellte Rad ist als Gussteil aus Aluminium hergestellt. Das Rad weist eine Lackschicht 18 auf, die es weitgehend vollständig umgibt.

Im Bereich der Speichen 14 sind an den in der Perspektive der Fig. 1 oberen Seiten 14a, die im montierten Zustand die fahrzeugabgewandten Seiten bilden, jeweils längliche Erhebungen 20 vorgesehen, die sich in etwa in Richtung der Speichen 14 von innen nach außen erstrecken. Die Oberseiten 22 dieser Erhebungen 20 sind als Glanzflächen 22 ausgebildet, die durch eine spanende Fräsbearbeitung in einen metallisch glänzenden Zustand überführt wurden.

Die Erhebung 20 mit der Glanzfläche 22 ist in den Schnittdarstellungen der Fig. 1 dargestellt. Die drei dargestellten Schnittdarstellungen zeigen jeweils einen Schnitt entlang einer tangentialen Ebene durch die Speiche 14 hindurch. Von oben nach unten handelt es sich dabei um einen Schnitt am äußeren Rand der Erhebung 22, in der Mitte der Erhebung 22 und am inneren Rand der Erhebung 22. In den Schnittdarstellungen ist durch eine starke Linie die Lackschicht 18 dargestellt. Es ist zu erkennen, dass im Bereich der Glanzfläche 22 die Lackschicht 18 durch die Fräsbearbeitung entfernt wurde.

Zur Herstellung der Glanzflächen 22 des dargestellten Rades 10 ist vorzugsweise vorgesehen, dass ein Umfangsfräser zur Nachbearbeitung des gegossenen Grundkörpers verwendet wird, der radial von innen nach außen oder von außen nach innen geführt wird. Dabei werden mehrere Durchgänge durchgeführt, die sich geringfügig in ihrer Bewegungsrichtung dadurch unterscheiden, dass die Bewegungspfade nach außen leicht divergieren. Weiterhin unterscheiden sich die Durchgänge dadurch, dass das Fräswerkzeug von Durchgang zu Durchgang bezüglich der Ausrichtung seiner Rotationsachse angepasst wird. Hierdurch lässt sich die dargestellte konvexe Formgebung der Glanzfläche 22 erreichen. Die Glanzfläche 22 ist durchgehend von innen nach außen konvex ausgebildet, wobei der Krümmungsradius an der Innenseite geringer als an der Außenseite ist.

Das beschriebene Fräsverfahren gestattet es, ästhetisch ansprechende Glanzflächen auch bei Gussteilen zu realisieren, ohne dass die aus dem Stand der Technik bekannte Einschränkung gegeben ist, dass die Glanzflächen sich allesamt auf einer gedachten rotationssymmetrischen Fläche befinden müssen.

Die Ausführungsform der Fig. 2 ist der Ausführungsform der Fig. 1 sehr ähnlich. Abweichend von der Ausführungsform der Fig. 1 ist die Glanzfläche 122 auf der Erhebung 120 jedoch konkav ausgestaltet. Zur Erzielung dieser Formgebung wird vorzugsweise ein Kugelfräser verwendet, der in ähnlicher Weise wie oben beschrieben in mehreren Durchgängen radial entlang leicht divergierender Bewegungsbahnen geführt wird, so dass sich die in Fig. 2 ersichtliche Aufweitung der Glanzfläche nach außen sowie der größere Krümmungsradius am äußeren Ende der Erhebung 20 ergeben.

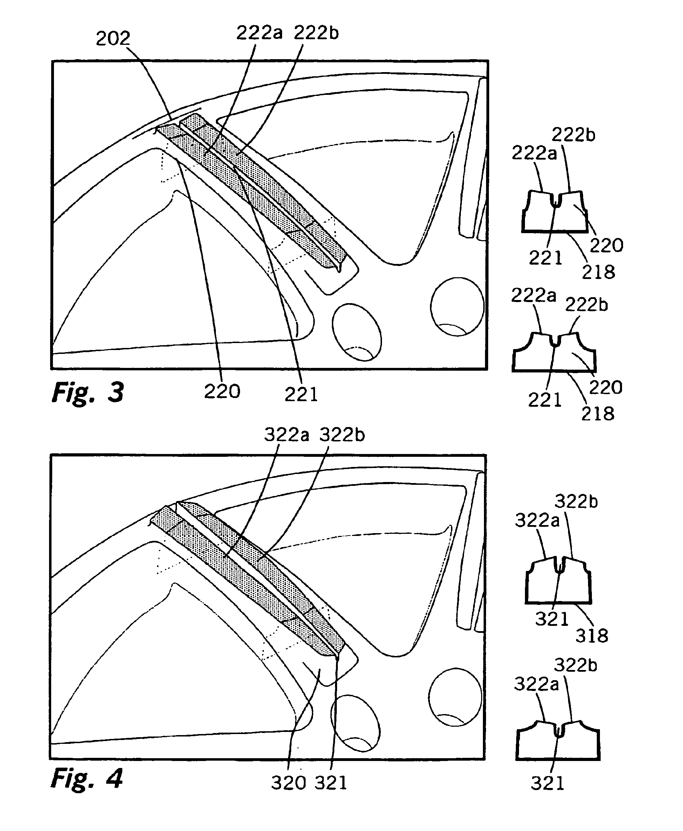

Bei der Ausführungsform der Fig. 3 sind zwei Glanzflächen 222a, 222b vorgesehen, die beide an der Oberseite einer gemeinsamen Erhebung 220 angeordnet sind. Die Erhebung 220 ist in Radialrichtung mit einem Schlitz 221 versehen, so dass sich die Zweiteilung in die beiden Glanzflächen 222a, 222b ergibt. Die Glanzflächen 222a, 222b sind jeweils gegenüber einer gedachten Tangentiallinie 202 geneigt, wobei der Neigungswinkel einmal positiv und einmal negativ ist. Dadurch bilden die Glanzflächen 222a, 222b eine Art Rinne.

Zur Herstellung der Glanzflächen 222a, 222b ist vorzugsweise vorgesehen, dass in nur zwei Durchgängen Umfangsfräser von innen nach außen über die Erhebung 220 geführt werden und dabei Material abnehmen, so dass es zu den dargestellten Glanzflächen 222a, 222b kommt. Durch den Schlitz 221 zwischen den Glanzflächen 222a, 222b ist gewährleistet, dass der Umfangsfräser nicht bei der bestimmungsgemäßen Bearbeitung einer der Glanzflächen die Oberfläche der anderen Glanzfläche verletzt.

Die Ausführungsform der Fig. 4 ist der Ausführungsform der Fig. 3 ähnlich. Allerdings sind die durch den Schlitz 321 voneinander getrennten Glanzflächen 322a, 322b nur am inneren Ende der Erhebung 320 rinnenartig aufeinander zu geneigt. Diese Neigung ändert sich über die Erstreckung der Glanzflächen 322a, 322b nach außen, so dass die Glanzflächen am gegenüberliegenden Ende der Erhebung 320 dachartig voneinander weg geneigt sind. Die Herstellung erfolgt vorzugsweise wieder mittels eines Umfangsfräsers, wobei dieser während seiner Verlagerung von innen nach außen gleichzeitig hinsichtlich seiner Rotationsachse gekippt wird, so dass sich die dargestellte leicht verdrillte Form der Glanzflächen 322a, 322b ergibt.

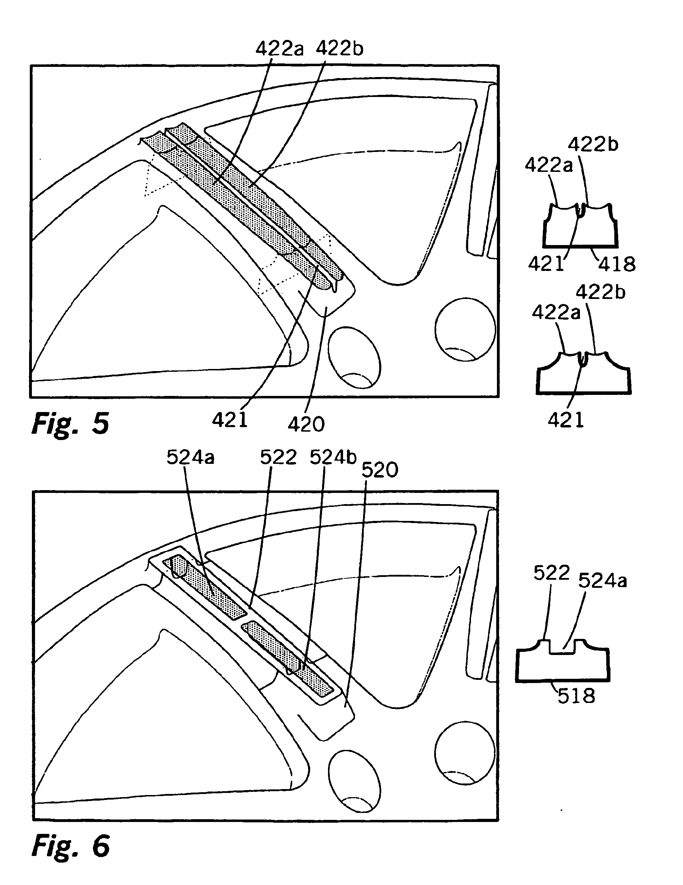

Bei der Ausführungsform der Fig. 5 sind wiederum zwei durch einen Schlitz 421 getrennte Glanzflächen 422a, 422b vorgesehen, wobei die Glanzflächen jeweils konkav ausgebildet sind. Obwohl die Glanzflächen am äußeren Ende breiter als am inneren Ende sind, bleibt der Krümmungsradius unverändert, so dass die dargestellten Glanzflächen 422a, 422b durch einen Kugelfräser in nur zwei Durchgängen hergestellt werden können, wobei dieser Kugelfräser zum äußeren Ende hin tiefer in die Erhebung 420 eintaucht.

Bei der Ausführungsform der Fig. 6 ist eine plane Glanzfläche 522 vorgesehen, die die Form einer langgestreckten Acht hat. In diese Glanzfläche 522 sind zwei Taschen 524a, 524b eingefräst.

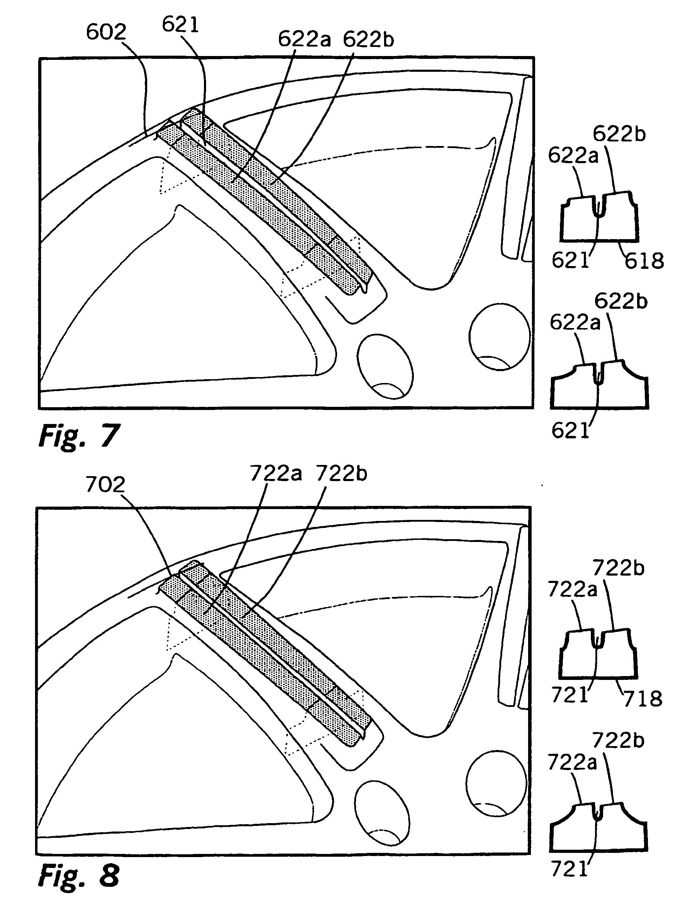

Bei der Ausführungsform der Fig. 7 sind wiederum zwei ebene Glanzflächen 622a, 622b vorgesehen, die gegenüber einer gedachten Tangentiallinie 602 geneigt sind. Die Glanzfläche 622a, 622b sind durch einen Schlitz 621 voneinander getrennt, dabei jedoch zum einen in die gleiche Richtung geneigt und zum anderen fluchtend zueinander ausgebildet. Die fluchtende Ausgestaltung gestattet eine besonders einfache Herstellung, da mit bereits einem einzigen Durchgang eines Umfangsfräsers beide Glanzflächen hergestellt werden können.

Die Ausführungsform der Fig. 8 ist ähnlich ausgebildet. Auch hier sind die beiden vorgesehenen Glanzflächen 722a, 722b gegenüber einer Tangentiallinie 702 in die gleiche Richtung geneigt, wobei die Glanzflächen 722a, 722b abweichend von der Ausführungsform der Fig. 7 gegeneinander versetzt sind und demnach nicht fluchten. Es bedarf daher mindestens zweier Durchgänge mit einem üblichen Umfangsfräser.

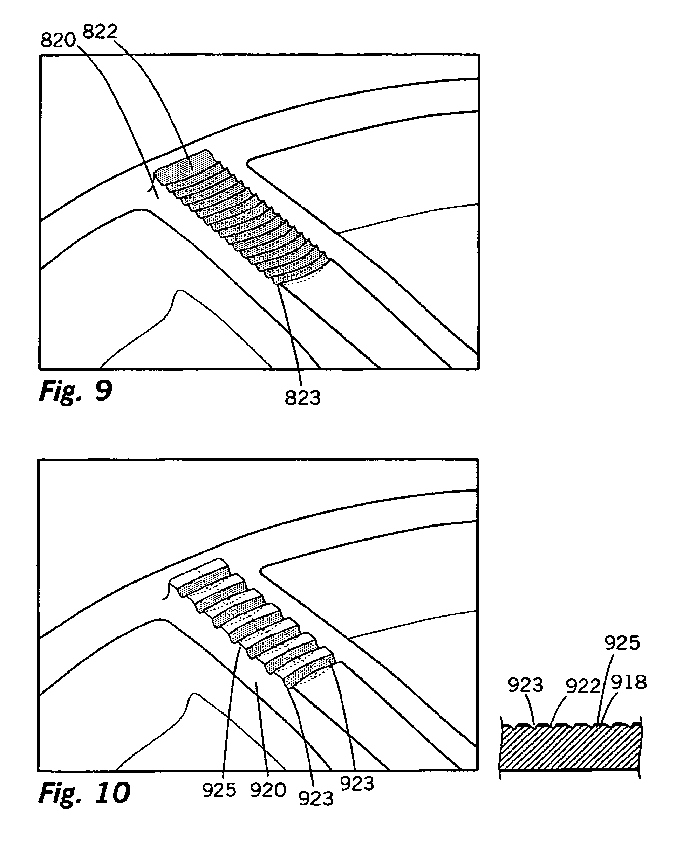

Die Ausführungsform der Fig. 9 ist deutlich anders als die vorangegangenen Ausführungsformen ausgestaltet. Zwar ist bei ihr ebenfalls eine Erhebung 820 vorgesehen, deren Oberseite durch einen Fräskopf bearbeitet wurde, um Glanzflächen 822 zu erzeugen. Dabei sind jedoch Nuten 823 zur Bildung der Glanzflächen 822 in die Erhebung 820 eingefräst worden. Diese Nuten sind gekrümmt ausgebildet, wobei die Krümmungsrichtung der Umfangsrichtung des Rades entgegenläuft. Die Nuten sind nahezu konzentrisch zu einer gedachten Achse ausgerichtet ist, die zur Mittelachse des Rades parallel ist, jedoch jenseits des Randes des Rades angeordnet ist.

Bei der Ausführungsform der Fig. 10 sind gerade Nuten 923 in die Erhebung 920 eingefräst worden, welche die Glanzflächen 922 bilden. Abweichend von der Ausgestaltung der Fig. 9 sind jedoch dabei zwischen den Nuten 923 Stege 925 belassen worden, die nicht spanend bearbeitet wurden und die demzufolge an ihrer Oberfläche die Farbe des Lackes 918 aufweisen. Diese Kombination aus Lackflächen und Glanzflächen 922 im Wechsel führt zu besonders interessanten optischen Effekten, da insbesondere im drehenden Betriebszustand des Fahrzeugrades die unterschiedliche Farbgebung der Glanzbereiche 922 und der lackierten Bereiche 925 zum Eindruck einer Mischfarbe führt.

Fig. 11 zeigt zwei verschiedene Fräswerkzeuge 50a, 50b mit unterschiedlichen Werkzeugdurchmesser, die jeweils bei gleichzeitiger Bewegung in Richtung 52a, 52b zur Herstellung der Felgenoberfläche verwendet werden. Wie anhand der rechtsseitig dargestellten durch den Fräsvorgang erzeugten Oberflächen erkennbar ist, führen die unterschiedlichen Werkzeugdurchmesser zu variierenden Schliffbildern mit bogenförmigen Strukturen unterschiedlicher Krümmung. Je nach Durchführung des Fräsvorgangs können diese bogenförmigen Strukturen so ausgebildet sein, dass sie bezogen auf die Felge radial nicht innen oder radial nach außen weisen.

## Patentansprüche

1. Fahrzeugrad (10) oder Radstern hierfür mit einem Grundkörper aus gegossenem oder geschmiedeten Metall, der auf seiner fahrzeugabgewandten Seite mit einer Lackschicht versehen ist und der an seiner fahrzeugabgewandten Seite zum einen Flächenabschnitte (925) aufweist, die nicht spanend bearbeitet sind, und zum anderen mindestens einen Flächenabschnitt aufweist, der durch spanende Bearbeitung als Glanzfläche (22; 122; 222a, 222b; 322a, 322b; 422a, 422b; 622a, 622b; 722a, 722b; 822; 922) ausgebildet ist,
**dadurch gekennzeichnet, dass**
- die Glanzfläche zumindest abschnittsweise derart ausgerichtet ist, dass eine Flächennormale auf der Glanzfläche eine Mittelachse des Rades oder des Felgensterns nicht kreuzt und nicht zur Mittelachse parallel verläuft und
- die Lackschicht im Bereich der Glanzfläche durch die spanende Bearbeitung entfernt ist.

2. Fahrzeugrad oder Radstern nach Anspruch 1,
**dadurch gekennzeichnet, dass**
die Glanzfläche gegenüber äquidistant zur Mittelachse angeordneten fahrzeugabgewandten Flächenabschnitten des Grundkörpers zurückgesetzt ist.

3. Fahrzeugrad oder Radstern nach Anspruch 1 oder 2,
**dadurch gekennzeichnet, dass**
die Glanzfläche (22; 122; 222a, 222b; 322a, 322b; 422a, 422b; 622a, 622b; 722a, 722b) länglich geformt ist, im Bereich einer Speiche (14) vorgesehen ist und sich in etwa radial erstreckt.

4. Fahrzeugrad oder Radstern nach einem der vorstehenden Ansprüche,
**dadurch gekennzeichnet, dass**
die Glanzfläche (22; 122; 322a, 322b; 422a, 422b; 822; 922) uneben ausgebildet ist.

5. Fahrzeugrad oder Radstern nach Anspruch 4,
**dadurch gekennzeichnet, dass**
die Glanzfläche (22; 122; 422a, 422b) länglich ausgebildet ist und quer zu ihrer Haupterstreckungsrichtung zumindest abschnittsweise einen konkaven und/oder konvexen Querschnitt aufweist.

6. Fahrzeugrad oder Radstern nach einem der Ansprüche 3 bis 5,
**dadurch gekennzeichnet, dass**
die Glanzfläche (22; 122; 222a, 222b; 322a, 322b; 422a, 422b; 622a, 622b; 722a, 722b; 822; 922) länglich ausgebildet ist und in Umfangsrichtung gegenüber einer Tangente (22; 622; 722) zumindest abschnittsweise um einen Neigungswinkel geneigt ist.

7. Fahrzeugrad oder Radstern nach Anspruch 6,
**dadurch gekennzeichnet, dass**
der Neigungswinkel sich entlang der Haupterstreckungsrichtung der Glanzfläche (322a, 322b) ändert, vorzugsweise in einem ersten Teilabschnitt zwischen 0° und 45° und in einem zweiten Teilabschnitt zwischen -45° und 0° beträgt.

8. Fahrzeugrad oder Radstern nach einem der vorstehenden Ansprüche,
**dadurch gekennzeichnet, dass**
mehrere Glanzflächen (822; 922) vorgesehen sind, die in Form länglicher und zueinander paralleler Vertiefungen ausgebildet sind.

9. Fahrzeugrad oder Radstern nach einem der vorstehenden Ansprüche,
**dadurch gekennzeichnet, dass**
mindestens zwei zueinander parallele Glanzflächen (222a, 222b; 322a, 322b; 422a, 422b; 622a, 622b; 722a, 722b) im Bereich einer Speiche vorgesehen sind, zwischen denen eine Vertiefung (321; 421; 621; 721) vorgesehen ist.

10. Fahrzeugrad oder Radstern nach Anspruch 9,
**dadurch gekennzeichnet, dass**
die beiden parallelen Glanzflächen (321; 421) ebenensymmetrisch ausgebildet sind zu einer durch die Erstreckungsrichtung der Speiche und durch die Mittelachse aufgespannten Ebene.

11. Fahrzeugrad oder Radstern nach einem der vorstehenden Ansprüche,
**dadurch gekennzeichnet, dass**
mindestens zwei Speichen (14) vorgesehen sind, im Bereich derer jeweils mindestens eine Glanzfläche (22; 122; 222a, 222b; 322a, 322b; 422a, 422b; 622a, 622b; 722a, 722b; 822; 922) vorgesehen ist, wobei die Glanzflächen um die Mittelachse achsensymmetrisch zueinander angeordnet sind.

12. Verfahren zur Herstellung eines Fahrzeugrades (10) oder eines Radsterns für ein Fahrzeugrad, wobei ein durch Gießen oder Schmieden hergestellter Grundkörper zur Herstellung einer Glanzfläche (22; 122; 222a, 222b; 322a, 322b; 422a, 422b; 622a, 622b; 722a, 722b; 822; 922) im Bereich seiner fahrzeugabgewandten Seite abschnittsweise spanend bearbeitet wird,
**dadurch gekennzeichnet, dass**
- vor der spanenden Bearbeitung eine Lackschicht auf die fahrzeugabgewandte Seite des Fahrzeugsrades oder des Radsterns aufgebracht wird und
- die spanende Bearbeitung durch eine Fräsbearbeitung erfolgt, wobei durch die spanende Bearbeitung die Lackschicht im Bereich der Glanzfläche entfernt wird.

## Claims

1. Vehicle wheel (10) or wheel star for this with a base body of cast or forged metal having a layer of paint applied to the side that faces away from the vehicle, and which has, on the side that faces away from the vehicle, on the one hand regions of its surface (925) that have not been machined and which has on the other hand at least one region of its surface that has been machined to form a glossy surface (22; 122; 222a, 222b; 322a, 322b; 422a, 422b; 622a, 622b; 722a, 722b; 822; 922),
**characterized in that**
- the glossy surface is aligned at least in part in such a way that a normal to the glossy surface neither intersects a central axis of the wheel or of the rim star, nor is parallel to the central axis, and
- the layer of paint in the region of the glossy surface is removed by the machining.

2. Vehicle wheel or wheel star according to Claim 1,
**characterized in that**
the glossy region is recessed with respect to surface regions of the base body on the side facing away from the vehicle and equidistant from the central axis.

3. Vehicle wheel or wheel star according to Claim 1 or 2,
**characterized in that**
the glossy surface (22; 122; 222a, 222b; 322a, 322b; 422a, 422b; 622a, 622b; 722a, 722b) has an elongated shape, is formed in the region of a spoke (14), and extends in an approximately radial direction.

4. Vehicle wheel or wheel star according to one of the foregoing claims, **characterized in that**
the glossy surface (22; 122; 322a, 322b; 422a, 422b; 822; 922) is not plane.

5. Vehicle wheel or wheel star according to Claim 4,
**characterized in that**
the glossy surface (22; 122; 422a, 422b) has an elongated form and has, at least in sections, a concave and/or convex cross-section transverse to the main axis of its extension.

6. Vehicle wheel or wheel star according to one of Claims 3 to 5,
**characterised in that**
the glossy surface (22; 122; 222a, 222b; 322a, 322b; 422a, 422b; 622a, 622b; 722a, 722b; 822; 922) has an elongated form and is tilted in the circumferential direction, at least in sections, at an angle of inclination with respect to a tangent (22; 622; 722).

7. Vehicle wheel or wheel star according to Claim 6,
**characterized in that**
along the main axis of extension of the glossy surface (322a, 322b) the angle of inclination changes, preferably has in a first partial section between 0° and 45° and in a second partial section between -45° and 0°.

8. Vehicle wheel or wheel star according to one of the foregoing claims,
**characterized in that**
multiple glossy surfaces (822; 922) are provided, having the shape of elongated, mutually parallel depressions.

9. Vehicle wheel or wheel star according to one of the foregoing claims,
**characterized in that**
at least two mutually parallel glossy surfaces (222a, 222b; 322a, 322b; 422a, 422b; 622a, 622b; 722a, 722b) are formed in the region of a spoke, between which a depression (321; 421; 621; 721) is formed.

10. Vehicle wheel or wheel star according to Claim 9,
**characterized in that**
the two parallel glossy surfaces (321; 421) exhibit plane symmetry with respect to a plane defined by the direction of extension of the spoke and the central axis.

11. Vehicle wheel or wheel star according to one of the foregoing claims, **characterized in that**
at least two spokes (14) are provided, in the region of each of which at least one glossy surface (22; 122; 222a, 222b; 322a, 322b; 422a, 422b; 622a, 622b; 722a, 722b; 822; 922) is formed, whereby the glossy surfaces are axially symmetric with respect to one another about the central axis.

12. Method for manufacturing a vehicle wheel (10) or a wheel star for a vehicle wheel, whereby a base body fabricated through casting or forging is partially machined in the region of the side that faces away from the vehicle in order to create a glossy surface (22; 122; 222a, 222b; 322a, 322b; 422a, 422b; 622a, 622b; 722a, 722b; 822; 922),
**characterized in that**
- a layer of paint is applied prior to the machining to the side of the vehicle wheel or of the wheel star that faces away from the vehicle and
- the machining is performed by a milling process, whereby the machining removes the layer of paint in the area of the glossy surface.

## Revendications

1. Roue de véhicule (10) ou étoile de roue relative à cette dernière avec un corps de base en métal moulé ou forgé, lequel est pourvu sur son côté opposé au véhicule d'une couche de vernis et qui, d'une part, présente sur son côté opposé au véhicule des sections de surface (925) qui ne sont pas enlevées par usinage et, d'autre part, qui présente au moins une section de surface qui est conçue par usinage par enlèvement de copeaux sous forme de surface brillante (22 ; 122 ; 222a, 222b ; 322a, 322b ; 422a, 422b ; 622a, 622b ; 722a, 722b ; 822 ; 922),
**caractérisée en ce**
- **que** la surface brillante est orientée au moins partiellement, de sorte que, sur la surface brillante, aucune normale de surface ne croise un axe central de la roue ou de l'étoile de roue et qu'elle ne soit pas parallèle à l'axe central et
- **que** la couche de vernis est enlevée par l'usinage à enlèvement de copeaux dans le secteur de la surface brillante.

2. Roue de véhicule ou étoile de roue selon la revendication 1,
**caractérisée en ce**
**que** la surface brillante est reculée par rapport aux sections de surface du corps de base opposées au véhicule et disposées à équidistance de l'axe central.

3. Roue de véhicule ou étoile de roue selon la revendication 1 ou 2, **caractérisée en ce**
**que** la surface brillante (22 ; 122 ; 222a, 222b ; 322a, 322b ; 422a, 422b ; 622a, 622b ; 722a, 722b) a une forme oblongue, est prévue dans le secteur d'un rayon (14) et s'étend approximativement radialement.

4. Roue de véhicule ou étoile de roue selon l'une des revendications précédentes,
**caractérisée en ce**
**que** la surface brillante (22; 122; 322a, 322b; 422a, 422b; 822; 922) a une forme non plane.

5. Roue de véhicule ou étoile de roue selon la revendication 4,
**caractérisée en ce**
**que** la surface brillante (22 ; 122 ; 422a, 422b) a une forme oblongue et présente, transversalement par rapport à son sens principal d'extension et au moins partiellement, une section transversale concave et/ou convexe.

6. Roue de véhicule ou étoile de roue selon l'une des revendications 3 à 5,
**caractérisée en ce**
**que** la surface brillante (22 ; 122 ; 222a, 222b ; 322a, 322b ; 422a, 422b ; 622a, 622b ; 722a, 722b ; 822 ; 922) est oblongue et ladite surface étant inclinée au moins partiellement, dans le sens périphérique, d'un angle d'inclinaison par rapport à une tangente (22 ; 622 ; 722).

7. Roue de véhicule ou étoile de roue selon la revendication 6,
**caractérisée en ce**
**que** ledit angle d'inclinaison varie le long du sens principal d'extension de la surface brillante (322a, 322b), et ledit angle se situant de préférence dans une première section partielle entre 0° et 45° et dans une seconde section partielle entre -45° et 0°.

8. Roue de véhicule ou étoile de roue selon l'une des revendications précédentes,
**caractérisée en ce**
**que** plusieurs surfaces brillantes (822; 922) sont prévues, lesquelles sont conçues sous la forme de creux oblongs et parallèles les uns aux autres.

9. Roue de véhicule ou étoile de roue selon l'une des revendications précédentes,
**caractérisée en ce**
**qu'**au moins deux surfaces brillantes parallèles les unes aux autres (222a, 222b ; 322a, 322b ; 422a, 422b ; 622a, 622b ; 722a, 722b) sont prévues dans le secteur d'un rayon, et un creux (321 ; 421 ; 621 ; 721) étant prévu entre celles-ci.

10. Roue de véhicule ou étoile de roue selon la revendication 9,
**caractérisée en ce**
**que** les deux surfaces brillantes parallèles (321 ; 421) sont conçues symétriques dans le plan par rapport à un plan déterminé par le sens d'extension du rayon et par l'axe central.

11. Roue de véhicule ou étoile de roue selon l'une des revendications précédentes,
**caractérisée en ce**
**qu'**il est prévu au moins deux rayons (14), au moins une surface brillante (22 ; 122 ; 222a, 222b ; 322a, 322b ; 422a, 422b ; 622a, 622b ; 722a, 722b ; 822 ; 922) étant prévue dans le secteur de ces derniers, sachant que les surfaces brillantes sont disposées autour de l'axe central en étant symétriques les unes aux autres par rapport à cet axe.

12. Procédé de fabrication d'une roue de véhicule (10) ou d'une étoile de roue pour une roue de véhicule, sachant qu'un corps de base fabriqué par moulage ou forgeage subit partiellement un usinage par enlèvement de copeaux dans le secteur de son côté opposé au véhicule pour l'obtention d'une surface brillante (22 ; 122 ; 222a, 222b ; 322a, 322b ; 422a, 422b ; 622a, 622b ; 722a, 722b ; 822 ; 922) ,
**caractérisée en ce**
- **qu'**avant l'usinage par enlèvement de copeaux, une couche de vernis est apposée sur le côté de la roue du véhicule ou de l'étoile de roue opposé au véhicule et
- **que** l'usinage par enlèvement de copeaux est réalisé par fraisage, sachant que la couche de vernis est enlevée dans le secteur de la surface brillante par ledit usinage.
